Europäisches Patentamt

European Patent Office

Office européen des brevets

(19)

(11) Veröffentlichungsnummer: **0 031 454**
**B1**

(12) # EUROPÄISCHE PATENTSCHRIFT

(45) Veröffentlichungstag der Patentschrift:
13.04.83

(51) Int. Cl.³: **A 01 N 25/04,** A 01 N 47/18 //
(A01N47/18, 43/60)

(21) Anmeldenummer: 80107262.0

(22) Anmeldetag: 21.11.80

(54) Fungizide Mischungen auf der Basis von Triforin und Carbendazim und Verfahren zu deren Herstellung.

(30) Priorität: 22.12.79 DE 2952239

(43) Veröffentlichungstag der Anmeldung:
08.07.81 Patentblatt 81/27

(45) Bekanntmachung des Hinweises auf die Patenterteilung:
13.04.83 Patentblatt 83/15

(84) Benannte Vertragsstaaten:
AT BE CH DE FR GB IT LI LU NL SE

(56) Entgegenhaltungen:
DE-A-2 128 225
DE-A-2 417 008
DE-A-2 521 384
GB-A-2 003 032

(73) Patentinhaber: CELAMERCK GmbH & Co. KG, Binger Strasse 173, D-6507 Ingelheim am Rhein (DE)

(72) Erfinder: Itzel, Hanshelmut, Dr., Im Herzenacker 51, D-6535 Gau-Algesheim (DE)

BUNDESDRUCKEREI BERLIN

# Fungizide Mischungen auf der Basis von Triforin und Carbendazim und Verfahren zu deren Herstellung

Die Erfindung betrifft neue fungizide Mischungen und ihre Herstellung.

Aus biologischen Gründen ist es erwünscht, die beiden systemischen Fungizide 1,1'-Piperazin-1,4-diyldi-[N-(2,2,2-trichloräthyl)-formamid] (Triforine) und Methyl-benzimidazol-2-ylcarbamat (Carbendazim) gemeinsam zur Bekämpfung von Pilzkrankheiten an Pflanzen einzusetzen. Zur besseren Handhabbarkeit der Wirkstoffkombination sind Zubereitungen erwünscht, die beide Wirkstoffe enthalten.

Triforine entfaltet seine volle Wirkung nur, wenn es in gelöster Form angewendet wird. Um eine gute Stabilität der Triforine-Konzentrate zu erreichen, werden diese unter Zusatz von DBS-Salzen, insbesondere Aminsalzen (DBS = Dodecylbenzolsulfonsäure) formuliert. Carbendazim wird vorzugsweise in Form von Suspensionspulvern angewendet.

Die Aufgabe, eine den praktischen Anforderungen genügende gemeinsame flüssige Formulierung der Wirkstoffe herzustellen, mußte nach dem Stand der Technik unlösbar erscheinen.

Triforine ist nur in wenigen Lösungsmitteln ausreichend löslich. In diesen Lösungsmitteln ist jedoch die Löslichkeit von Carbendazim zu gering (sie liegt bei Raumtemperatur zwischen 0,7 und 0,35%) für die Herstellung eines Lösungskonzentrats. Andererseits ist diese Löslichkeit zu groß, als daß man hätte erwarten können, Carbendazim-Feststoff lasse sich zu einer hinreichend beständigen Suspension in diesen Lösungsmitteln verarbeiten. Man mußte nämlich nach dem Stand des Wissens bei Lagerung mit Kristallwachstum aufgrund der Ostwald-Reifung rechnen. Dieses Kristallwachstum hätte die Zubereitung für die Anwendung als Pflanzenschutzmittel praktisch unbrauchbar gemacht. Weiterhin bildet Carbendazim selbst lösliche DBS-Salze. Der Einsatz der nach DE-OS 2 521 384 für die Stabilität der Triforine-Zubereitungen wichtigen DBS-Salze erhöht daher die Löslichkeit des Carbendazims. Dadurch wird die Chance, das Kristallwachstum zu verhindern, weiter verringert. Carbendazim kann auch nicht unmittelbar in Form der löslichen DBS-Salze des Carbendazims (DE-OS 2 417 008) eingesetzt werden, denn diese Salze sind instabil, hydrolysieren innerhalb kurzer Zeit und führen dazu, daß das Carbendazim in großen Kristallen irreversibel ausfällt. Auch die in der DE-OS 2 219 174 beanspruchten Addukte sind in den Mischungen mit Triforine und DBS-Salzen instabil. Die weiteren, in DE-OS 1 957 712, 2 154 020, 2 303 757, 2 354 467, 2 354 468 und in der japanischen Patentanmeldung 7 240 060 beanspruchten flüssigen Zubereitungen des Carbendazims kommen für die fungiziden Mischungen mit Triforine nicht in Betracht, da z. B. Metallsalze die Zersetzung des Triforines katalysieren und in Mineralölen das Triforine unlöslich ist und deshalb nicht zur Wirkung kommt.

Überraschenderweise ist es möglich, Suspensionen von Carbendazim in Lösungen von Triforine in Dimethylformamid und/oder N-Methylpyrrolidon, gegebenenfalls mit einem Gehalt an DBS-Salzen, dadurch zu stabilisieren, daß man Saccharide und/oder Polyethylenglykol (PEG) und/oder Mischungen von Polyvinylpyrrolidon/Polyvinylacetaten (PVP/PVA) zusetzt. In Suspensionen dieser Art sedimentiert einerseits das feinverteilte Carbendazim nicht, andererseits bleibt auch seine Rekristallisationsneigung gering. Die nachstehenden Beispiele belegen das.

## 1. Stabilisierung mit Polyethylenglykol

Zusammensetzung des Konzentrats (% w/w)

| | |
|---|---|
| Triforine | 10,0 |
| Carbendazim | 10,0 |
| Emulgator | 10,0 (DBS-Aminsalz) |
| PEG | 10,0 |
| DMF | ad 100 |

| Molekulargewicht des PEG | % überstehende Flüssigkeit nach 20 Tagen |
|---|---|
| Kontrolle (ohne PEG) | 74 |
| 6 000 | 0 |
| 20 000 | 17 |
| 35 000 | 0 |

## 2. Stabilisierung mit verschiedenen Sacchariden

Zusammensetzung des Konzentrats (% w/w):

| | |
|---|---|
| Triforine | 10,0 |
| Carbendazim | 10,0 |
| Emulgator | 10,0 (DBS-Aminsalz) |
| Saccharid | x |
| Dimethylformamid | ad 100 |

| Saccharid | Konzentration (% w/w) | % überstehende Flüssigkeit nach 20 Tagen |
|---|---|---|
| Kontrolle (ohne Saccharid) | | 74 |
| Rohrzucker | 20 | 31 |
| Stärke | 10 | 12 |
| Stärke | 20 | 3 |
| Cellulose | 3 | 0 |
| Dextrin | 10 | 1 |
| Dextrin | 15 | 0 |

## 3. Stabilisierung mit Dextrin und PVP/PVA

Zusammensetzung des Konzentrats (% w/w):

| | |
|---|---|
| Triforine | 10,0 |
| Carbendazim | 10,0 |
| Triäthylamin-Salz der DBS | 12,0 |
| Entschäumer | 2,0 |
| Dextrin | x |
| Mischung aus Polyvinylpyrrolidon und Polyvinylacetat | y |
| Dimethylformamid | ad 100 |

| Konzentration Dextrin | Konzentration PVP/PVA | % überstehende Flüssigkeit nach 20 Tagen |
|---|---|---|
| 0 (Kontrolle) | 0 | 75 |
| 5 | 0 | 37 |
| 5 | 1 | 28 |
| 5 | 5 | 9 |
| 10 | 0 | 7 |
| 15 | 5 | 0 |

0 031 454

## 4. Stabilisierung mit PEG, Dextrin und gegebenenfalls PVP/PVA

Zusammensetzung des Konzentrats (% w/w):

| | |
|---|---|
| Triforine | 10,0 |
| Carbendazim | 10,0 |
| PEG*) | x |
| Dextrin | y |
| PVP/PVA 30 : 70 | z |
| Dimethylformamid | ad 100 |

*) Molekulargewicht 6000.

| PEG | Konzentration | | % überstehende Flüssigkeit |
|---|---|---|---|
| | Dextrin | PVP/PVA | nach 20 Tagen |
| 5 | 0 | 0 | 10 |
| 5 | 2 | 0 | 2 |
| 5 | 2 | 2 | 0 |
| 5 | 5 | 0 | 0 |
| 5 | 5 | 2 | 0 |
| 5 | 10 | 0 | 0 |
| 5 | 10 | 5 | 0 |

Die gemäß der Erfindung verwendbaren Stabilisierungsmittel können je für sich oder in Kombination eingesetzt werden. Als Basis der Formulierung dient eine Lösung von Trifluorine in N-Methylpyrrolidin, Dimethylformamid oder Mischungen dieser Lösungsmittel, wobei der Triforine-Gehalt 1 bis 20 Gewichtsprozent, vorzugsweise 5 – 15 Gewichtsprozent, beträgt (diese und die folgenden Prozentangaben beziehen sich auf die fertige Formulierung). Der Carbendazim-Gehalt liegt zwischen 1 und 40, bevorzugt zwischen 5 und 15 Gewichtsprozent.

Als Saccharide können Oligo- und Polysaccharide in Mengen zwischen 1 und 40, vorzugsweise 3 und 10 Gewichtsprozent Verwendung finden. Beispiele für geeignete Saccharide sind Saccharose, Maltose, Lactose, Raffinose, Dextrin, Stärke, Cellulose. Im allgemeinen läßt sich eine gute Stabilisierung mit Polysacchariden leichter erzielen als mit Di- und Trisacchariden.

Als Polyethylenglykol werden für die Stabilisierung solche verwendet, die ein Molekulargewicht über 2000 haben, vorzugsweise im Bereich zwischen 6000 und 35 000. Der Anteil dieser Verbindungen an der Formulierung beträgt 5 – 15, vorzugsweise 10 – 15 Gewichtsprozent.

Polyvinylpyrrolidone und Polyvinylacetate werden in Form von Mischungen im Gewichtsverhältnis 4 : 1 bis 1 : 4, vorzugsweise 1 : 1 bis 2 : 1 angewendet. Sie werden den Formulierungen in Mengen von 1 bis 15, vorzugsweise 1 bis 5 Gewichtsprozent zugesetzt.

Benutzt man eine Kombination zweier erfindungsgemäß verwendbarer Stabilisatoren, so ist es zweckmäßig, Saccharide und PVP/PVA-Mischungen im Gewichtsverhältnis 1 : 15 bis 40 : 1, vorzugsweise 5 : 1 bis 10 : 1 einzusetzen; Kombinationen von Sacchariden und PEG im Gewichtsverhältnis 1 : 5 bis 5 : 1, vorzugsweise 2 : 5 bis 1 : 1.

Für Dreierkombinationen aus PEG, Sacchariden und PVP/PVA-Mischungen empfehlen sich Mischungsverhältnisse zwischen 1 : 1 : 1 über 5 : 1 : 1 über 1 : 5 : 1 bis 5 : 5 : 1. Hervorzuheben ist der Bereich zwischen 2 : 2 : 1 und 3 : 3 : 1.

Die Stabilisierungsmittel werden in feinster Verteilung angewendet. Verfahren zur Herstellung der erfindungsgemäßen Formulierungen werden im folgenden beschrieben.

### Herstellverfahren 1

In der Mischung von Lösungsmitteln PVA/PVP- und DBS-Aminsalzen wird das Triforine evtl. mit weiteren Hilfsstoffen gelöst. Zu dieser Lösung wird fein gemahlenes Saccharid gegeben und die

4

Mischung unter guter Kühlung über eine Perl- bzw. Kugelmühle gemahlen, bis das Saccharid eine Teilchengröße unter 5 μ besitzt. Zu dieser Mischung wird dann das Carbendazim gegeben, bevorzugt, nachdem es einer Luftstrahlmahlung unterworfen wurde und praktisch keine Teilchen über 5 μ besitzt, und erneut in einer Perl- oder Kugelmühle dispergiert bzw. fein vermahlen. Das so erhaltene Produkt besitzt eine ausgezeichnete Sedimentationsstabilität und Lagerstabilität.

## Herstellverfahren 2

In eine Lösung von Triforine, DBS-Aminsalzen in Dimethylformamid wird mikronisiertes Carbendazim zusammen mit Polyethylenglycolen eines mittleren Molekulargewichts von 6000 eingerührt. Die so erhaltene Mischung wird unter gutem Kühlen über eine Perl- bzw. Kugelmühle gemahlen.

## Herstellverfahren 3

Eine Mischung von Polyethylenglycol und Saccharid, bevorzugt Dextrin, wird in Dimethylformamid suspendiert. Diese Suspension wird in einer Kugelmühle einer Naßmahlung unterworfen. Zu der so erhaltenen Mischung wird eine separat hergestellte Lösung von Triforine, DBS-Aminsalz und Entschäumer gegeben und gut durchgemischt. Danach wird mikronisiertes Carbendazim in dieser Mischung suspendiert.

**Patentansprüche**

1. Flüssige Fungizidformulierung auf der Basis von Triforine und Carbendazim, bei der als Lösungsmittel für das Triforine Dimethylformamid, N-Methylpyrrolidon oder Mischungen davon dienen, gegebenenfalls unter Zusatz von Salzen der Dodecylbenzolsulfonsäure, dadurch gekennzeichnet, daß das Carbendazim als Suspension in der Lösung des Triforines enthalten ist und daß sie als stabilisierende Zusätze Saccharide und/oder Polyethylenglykol und/oder Mischungen von Polyvinylpyrrolidon/Polyvinylacetat enthält.

2. Formulierung nach Anspruch 1, dadurch gekennzeichnet, daß der Triforine-Gehalt 1−20 Gew.-%, vorzugsweise 5−15 Gew.-%, der Carbendazim-Gehalt 1−40 Gew.-%, vorzugsweise 5−15 Gew.-% beträgt.

3. Formulierung nach Anspruch 1 oder 2, dadurch gekennzeichnet, daß der Anteil der Saccharide an der Zubereitung 1−40 Gew.-%, vorzugsweise 3−10 Gew.-% beträgt.

4. Formulierung nach Anspruch 1 oder 2, dadurch gekennzeichnet, daß der Anteil an Polyvinylpyrrolidon/Polyvinylacetat-Mischung 1−15 Gew.-%, vorzugsweise 1−5 Gew.-% beträgt, wobei das Mischungsverhältnis der genannten Komponenten 4 : 1 bis 1 : 4, vorzugsweise 1 : 1 bis 2 : 1 ist.

5. Formulierung nach Anspruch 1 oder 2, dadurch gekennzeichnet, daß der Anteil an Polyethylenglykol 5−20 Gew.-%, vorzugsweise 10−15 Gew.-% beträgt.

6. Formulierung nach Anspruch 1 oder 2, dadurch gekennzeichnet, daß gleichzeitig Saccharide und Polyvinylpyrrolidon/Polyvinylacetat-Mischungen als Stabilisierungsmittel dienen, wobei das Gewichtsverhältnis der Saccharide zu den Polyvinylpyrrolidon/Polyvinylacetat-Mischungen 1 : 15 bis 40 : 1, vorzugsweise 5 : 1 bis 10 : 1 ist.

7. Formulierung nach Anspruch 1 oder 2, dadurch gekennzeichnet, daß gleichzeitig Saccharide und Polyethylenglykol als Stabilisierungsmittel dienen, wobei das Gewichtsverhältnis dieser Komponenten 1 : 5 bis 5 : 1, vorzugsweise 2 : 5 bis 1 : 1 beträgt.

8. Formulierung nach Anspruch 1 oder 2, dadurch gekennzeichnet, daß gleichzeitig Polyethylenglykol und Polyvinylpyrrolidon/Polyvinylacetat als Stabilisierungsmittel dienen.

9. Formulierung nach Anspruch 1 oder 2, dadurch gekennzeichnet, daß Polyethylenglykol, Saccharide und Polyvinylpyrrolidon/Polyvinylacetat (4 : 1 bis 1 : 4) gleichzeitig als Stabilisierungsmittel dienen, wobei das Gewichtsverhältnis der drei Komponenten zwischen 1 : 1 : 1 über 1 : 5 : 1 über 5 : 1 : 1 bis 5 : 5 : 1, vorzugsweise zwischen 2 : 2 : 1 bis 3 : 3 : 1 liegt.

10. Verfahren zur Herstellung von flüssigen Fungizidformulierungen nach Anspruch 1 bis 9, dadurch gekennzeichnet, daß man aus Lösungsmittel, Triforine und gegebenenfalls DBS-Salzen eine Lösung herstellt, diese mit den feinzerteilten Stabilisatoren und dem mikronisierten Carbendazim vermischt und gegebenenfalls zwischendurch oder am Schluß vermahlt.

**Claims**

1. Liquid fungicide formulation based on triforine and carbendazim, wherein dimethyl formamide, N-methylpyrrolidone or mixtures thereof, possibly with the addition of salts of dodecylbenzenesulphonic acid, are used as solvent for the triforine, characterised in that the carbendazim is contained as a suspension in the solution of the triforine and in that it contains, as stabilising additives, saccharides and/or polyethylene glycol and/or mixtures of polyvinylpyrrolidone and polyvinyl acetate.

2. Formulation as claimed in claim 1, characterised in that the triforine content is from 1—20% by weight, preferably 5—15% by weight, and the carbendazim content is from 1—40% by weight, preferably from 5—15% by weight.

3. Formulation as claimed in claim 1 or 2, characterised in that the proportion of saccharides in the preparation is from 1—40% by weight, preferably from 3—10% by weight.

4. Formulation as claimed in claim 1 or 2, characterised in that the proportion of polyvinylpyrrolidone/polyvinyl acetate mixture is from 1—15% by weight, preferably from 1—5% by weight, whilst the mixing ratio of these components is from 4 : 1 to 1 : 4, preferably from 1 : 1 to 2 : 1.

5. Formulation as claimed in claim 1 or 2, characterised in that the proportion of polyethylene glycol is from 5—20% by weight, preferably 10—15% by weight.

6. Formulation as claimed in claim 1 or 2, characterised in that saccharides and polyvinylpyrrolidone/polyvinyl acetate mixtures are used simultaneously as stabilisers, the weight ratio of the saccharides to the polyvinylpyrrolidone/polyvinyl acetate mixtures being from 1 : 15 to 40 : 1, preferably from 5 : 1 to 10 : 1.

7. Formulation as claimed in claim 1 or 2, characterised in that saccharides and polyethylene glycol are used simultaneously as stabilisers, the weight ratio of these components being from 1 : 5 to 5 : 1, preferably from 2 : 5 to 1 : 1.

8. Formulation as claimed in claim 1 or 2, characterised in that polyethylene glycol and polyvinylpyrrolidone/polyvinyl acetate are used simultaneously as stabilisers.

9. Formulation as claimed in claim 1 or 2, characterised in that polyethylene glycol, saccharides and polyvinylpyrrolidone/polyvinyl acetate (4 : 1 to 1 : 4) are used simultaneously as stabilisers, the weight ratio of the three components being from 1 : 1 : 1 via 1 : 5 : 1 via 5 : 1 : 1 to 5 : 5 : 1, preferably from 2 : 2 : 1 to 3 : 3 : 1.

10. Process for the preparation of liquid fungicide formulations as claimed in claims 1 to 9, characterised in that a solution is prepared from the solvent, triforine and, possibly, DBS salts and this solution is mixed with the finely divided stabilisiers and the micronised carbendazim and is optionally ground either during this mixing or at the end.


**Revendications**

1. Formulation fongicide liquide à base de triforine et de carbendazim dans laquelle on utilise en tant que solvant pour la triforine du diméthylformamide, de la N-méthylpyrrolidone ou des mélanges de ceux-ci, éventuellement en présence de sels de l'acide dodécylbenzènesulfonique, caractérisée en ce que le carbendazim est contenu sous forme de suspension dans la solution de la triforine et en ce qu'elle contient, en tant qu'additifs stabilisants, des saccharides et/ou du polyéthylèneglycol et/ou des mélanges de polyvinylpyrrolidone/acétate de polyvinyle.

2. Formulation selon la revendication 1, caractérisée en ce que la teneur en triforine est de 1—20% en poids, de préférence 5—15% en poids, la teneur en carbendazim de 1—40% en poids, de préférence 5—15% en poids.

3. Formulation selon la revendication 1 ou 2, caractérisée en ce que la proportion des saccharides dans la préparation est de 1—40% en poids, de préférence 3—10% en poids.

4. Formulation selon la revendication 1 ou 2, caractérisée en ce que la proportion du mélange de polyvinylpyrrolidone/acétate de polyvinyle est de 1—15% en poids, de préférence 1—5% en poids, le rapport de mélange des composants mentionnés étant de 4 : 1 à 1 : 4, de préférence 1 : 1 à 2 : 1.

5. Formulation selon la revendication 1 ou 2, caractérisée en ce que la proportion en polyéthylèneglycol est de 5—20% en poids, de préférence 10—15% en poids.

6. Formulation selon la revendication 1 ou 2, caractérisée en ce que les saccharides et les mélanges polyvinylpyrrolidone/acétate de polyvinyle servent en même temps de stabilisants, le rapport en poids des saccharides aux mélanges polyvinylpyrrolidone/acétate de polyvinyle étant de 1 : 15 à 40 : 1, de préférence de 5 : 1 à 10 : 1.

7. Formulation selon la revendication 1 ou 2, caractérisée en ce que les saccharides et le polyéthylèneglycol servent en même temps de stabilisants, le rapport en poids de ces composants étant de 1 : 5 à 5 : 1, de préférence 2 : 5 à 1 : 1.

8. Formulation selon la revendication 1 ou 2, caractérisée en ce que le polyéthylèneglycol et le polyvinylpyrrolidone/acétate de polyvinyle servent en même temps de stabilisants.

9. Formulation selon la revendication 1 ou 2, caractérisée en ce que le polyéthylèneglycol, les saccharides et le polyvinylpyrrolidone/acétate de polyvinyle (4 : 1 à 1 : 4) servent en même temps de stabilisants, le rapport en poids des trois composants étant compris entre 1 : 1 : 1, en passant par 1 : 5 : 1 et 5 : 1 : 1, à 5 : 5 : 1, de préférence entre 2 : 2 : 1 à 3 : 3 : 1.

10. Procédé de préparation de formulations fongicides liquides selon la revendication 1 à 9, caractérisé en ce qu'à partir d'un solvant, de triforine et éventuellement de sels de DBS, on prépare une solution, on mélange celle-ci avec les stabilisants finement divisés et le carbendazim micronisé et éventuellement on broie en même temps ou à la fin.